# EUROPEAN PATENT SPECIFICATION

(11) **EP 0 933 930 B1**
(45) Date of publication and mention of the grant of the patent: **26.11.2003**
(21) Application number: 99101089.3
(22) Date of filing: 26.01.1999
(51) Int. Cl.: H04N 7/16, H04N 5/445, H04N 5/76

(54) **Television set**
Fernsehgerät
Appareil de télévision

(30) Priority: 30.01.1998 JP 1983498
(43) Date of publication of application: 04.08.1999
(73) Proprietor: KABUSHIKI KAISHA TOSHIBA, Kawasaki-shi, Kanagawa-ken 210-8572 (JP)
(72) Inventor: Kamemoto, Kazuhiro, Fukaya-shi, Saitama-ken 366-0827 (JP)
(74) Representative: HOFFMANN - EITLE

(56) References cited:
- WO-A-97/42759
- WO-A-97/47135
- WO-A-98/03012
- WO-A-98/03015

## Description

### Background of the Invention

### Field of the Invention

The present invention relates to a television set suitable for a system which enables simultaneous receiving of several broadcast programs.

### Related Art Statement

Recently, television sets with a screen having an aspect ratio for a wider perspective than that for the current NTSC video signal are becoming popular. To take advantage of such a wider screen, some television sets with a double-window function to display two images on the screen are already in the market. Further, television sets with a multi-screen function to display several sub-screens in addition to the main screen have been developed.

An example of the television set with the multi-screen function is a color television set "32DW7X" from Toshiba, which was released in June 1997. Detailed description about the multi-screen display function of this television set is given in "The Latest Technology of Toshiba's Double-Window Television Set" on pp. 69-73 of "Hoso Gijutsu" (September 1997).

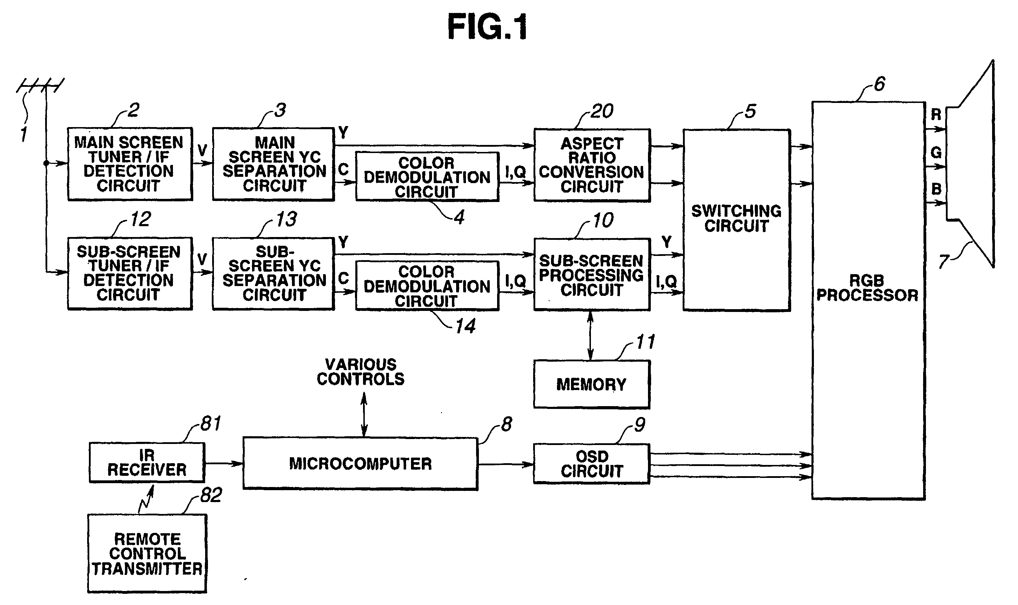

Fig. 1 is a block diagram showing technologies related to the television set with the double-window function and shows the configuration of the above color television set "32DW7X" from Toshiba.

The RF signal induced at an antenna 1 is supplied to a main screen tuner/IF detection circuit 2 and a sub-screen tuner/IF detection circuit 12. The main screen tuner/IF detection circuit 2 selects the video signal of the channel for the main screen (Main screen video signal) and supplies it to a main screen YC separation circuit 3. Similarly, the sub-screen tuner/IF detection circuit 12 selects the video signal of the channel for the sub-screen (Sub-screen video signal) and supplies it to a sub-screen YC separation circuit 13.

The user selects a channel by operating a remote control transmitter 82. The remote control signal from the remote control transmitter 82 is received by an IR receiver 81 and sent to a microcomputer 8. The microcomputer 8 generates various control signals according to the remote control operation by the user and supplies them to the applicable parts.

The main screen video signal is separated by the main screen YC separation circuit 3 into the luminance signal (Y) and the color signal (C). The luminance signal is supplied as it is to an aspect ratio conversion circuit 20 and the color signal is demodulated by a color demodulation circuit 4 and before being supplied to the aspect ratio conversion circuit 20. Similarly, the sub-screen video signal is separated by the sub-screen YC separation circuit 13 into the luminance signal (Y) and the color signal (C). The Y signal separated from the sub-screen video signal is supplied to the sub-screen processing circuit 10 and the C signal is demodulated by a color demodulation circuit 14 and supplied to a sub-screen processing circuit 10.

The aspect ratio conversion circuit 20 converts the aspect ratio of the luminance signal (Y) and the color difference signals (I, Q) according to the main screen video signal and outputs the ratio to a switching circuit 5. On the other hand, the sub-screen processing circuit 10 subjects the luminance signal (Y) and the color difference signals (I, Q) according to the sub-screen video signal to predetermined processing including the image size reduction. It stores the processed data to a memory 11 and at the same time outputs them to the switching circuit 5. The sub-screen processing circuit 10 outputs several sub-screen video signals to the switching circuit 5 by storing several processed images to the memory 11.

The switching circuit 5 switches between the main screen video signal from the aspect ratio conversion circuit 20 and the sub-screen video signal from the sub-screen processing circuit 10 at the applicable screen display timings and supplies them to an RGB processor 6. An OSD circuit 9 prepares the video signal to display predetermined indications including the channel number on the display screen according to the signal from the microcomputer 8 and outputs such signal to the RGB processor 6.

The RGB processor 6 converts the input luminance signal and color difference signals into R, G and B signals and supplies them to a picture tube 7. Thus, the main screen and several sub-screens are displayed on the display screen of the picture tube 7.

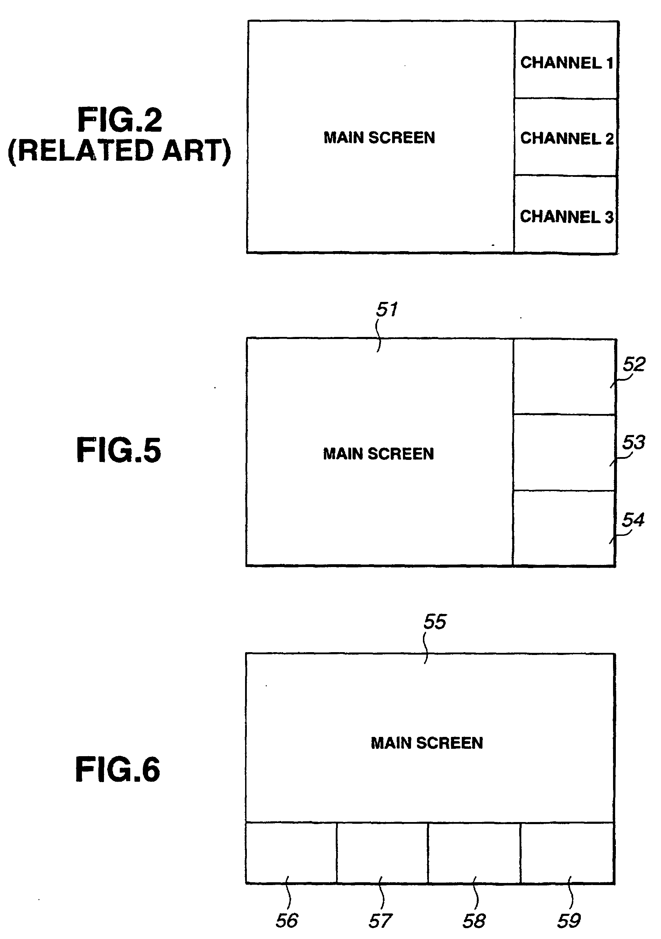

Fig. 2 is an explanatory view of an example of display on the display screen of the picture tube 7.

In Fig. 2, the display screen has a main screen area and several sub-screen areas. In the main screen area, the main screen image compressed in the horizontal direction by the aspect ratio conversion circuit 20 is displayed. In the sub-screen areas, several sub-screen images are displayed when switched from the main screen image by the switching circuit 5. Though Fig. 2 shows an example where three sub-screens are displayed, display of six screens, nine screens or twelve screens can be also achieved.

The display on these sub-screens is controlled by the microcomputer 8. For example, the microcomputer 8 can display the sub-screen images in three sub-screen areas in the mode to display the images one by one according to the order of the broadcasting channel numbers (so-called multi-channel search mode).

The user can select the image to be displayed on the main screen by checking the images of the channels displayed in the sub-screen areas.

Recently, researches of digital broadcasting are in progress. In the digital broadcasting, the EPG information is planned to be inserted for every channel so that the program table is displayed on each terminal. Thus, the user can select channels with referring to the program table according to the EPG information.

In other words, the user may select a program with referring to several programs displayed in the sub-screen areas or may select a program with referring to the program table displayed on the display screen.

However, the channel selection is becoming quite complicated with the recent increase of the channels in the broadcasting media. Since there are so many programs to be displayed in the sub-screen areas, the sub-screen area for one program becomes quite small and it is difficult to watch it. When you set relatively large sub-screen areas, it takes a long time to display the programs of all channels and it is also difficult to find the program you want to select. Further, even when the user selects a program with referring to the program table, it is quite difficult to find a program he/she wants from the table of all programs on all channels.

Therefore, a system which extracts the programs satisfying the predetermined conditions and displays them in several sub-screen areas has been proposed to facilitate the user's program selection. However, this system has a drawback that the retrieval conditions are limited and the user can have quite a limited choice only.

Thus, in case of the television set shown here as the related art, it becomes difficult to find a desired program with increase of the channels. Further, the user has limited alternatives when the conditions are specified.

In WO98/03015 there is disclosed a method for the automatic control of a radio-television receiver. A device is provided for selectively enabling/disabling a radio-television receiver to receive radio-television programs according to a predetermined selection. One particular use is to limit the viewing by children of programs which are unsuitable owing to their subject and content.

In WO97/42759 there is disclosed a TV rating system for blocking channels. A television receiving apparatus is selectively inhibited from displaying television channels which are not authorised for viewing, such as unsubscribed television channels and channels with programs which satisfy predetermined content ratings criteria.

In WO97/47135 there is disclosed a method and apparatus for automatically determining and dynamically updating user preferences in an entertainment system.

In WO98/03012 there is described methods and systems for providing information to a television using a personal computer. The personal computer is used to download and process auxiliary services which are intended for a television. Accordingly, information is provided to a television using a personal computer, so that the personal computer's processing power and memory may be used rather than stand-alone devices or a television memory.

### Objects and Summary of the Invention

An object of the present invention is to provide a television set which facilitates finding of a desired program even from the increased number of channels.

Another object of the present invention is to provide a television set which can increase the alternatives for the user by making use of the information from outside.

According to one aspect of the present invention there is provided a television set, characterized in that said television set comprises:
an information fetching means for fetching information about a plurality of programs transmitted on broadcasting signals via a predetermined transmission path;
a memory means for storing the information about the programs fetched by said information fetching means;
a filter means for extracting a plurality of programs based on the information stored in said memory means fetched by said information fetching means from the programs transmitted on said broadcasting signals, the filter means being connected to a recording means for storing the programs extracted by said filter means based on the information; and
a control means for controlling said recording means and reading out the programs stored in said recording means for displaying the plurality of programs based on the information on a multiple screen.

According to another aspect of the present invention there is provided a television set, characterized in that said television set comprises:
an information fetching means for fetching information about a plurality of programs transmitted on broadcasting signals via a predetermined transmission path;
a memory means which stores the information about the programs fetched by said information fetching means:
   a filter means for extracting a plurality of programs based on the information stored in said memory means fetched by said information fetching means among the programs transmitted on said broadcasting signals, the filter means being connected to temporary memory means for storing the programs temporarily extracted by said filter means based on the information; and
   a display control means for controlling said temporary memory means and reading out the programs stored in said temporary memory means for displaying the plurality of programs based on the information on a multiple screen.

Other characteristics and benefits of the present invention will be sufficiently clarified in the detailed description below.

### Brief Description of the Drawings

Fig. 1 is a block diagram showing a related art of a television set;
Fig. 2 is an explanatory view illustrating the operation of the television set as shown in Fig. 1;
Fig. 3 is a block diagram showing an embodiment of a television set according to the present invention;
Fig. 4 is a block diagram showing another embodiment of the present invention;
Fig. 5 is an explanatory view illustrating the embodiment of Fig. 4; and
Fig. 6 is an explanatory view illustrating the embodiment of Fig. 4.

### Detailed Description of the Preferred Embodiments

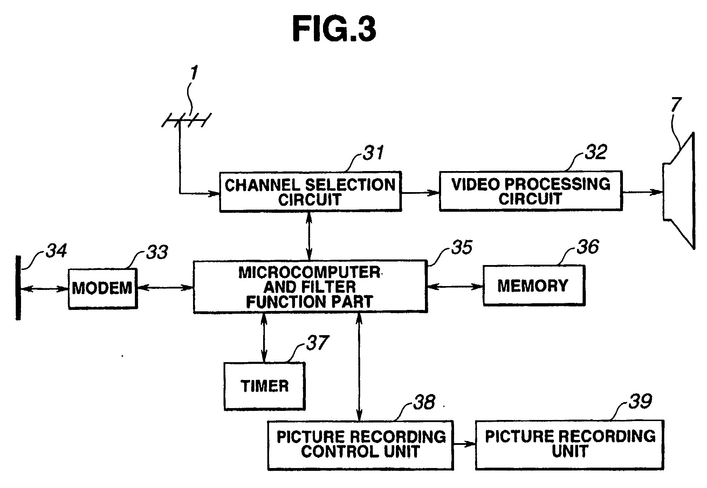

Referring to the attached figures, preferred embodiments of the present invention will be described in details below. Fig. 3 is a block diagram showing an embodiment of a television set according to the present invention.

In this embodiment, a television set not only selects a channel corresponding to the user's operation, but also makes selection corresponding to the information from outside. The information from outside may be EPG information contained in the broadcasting signal or may be predetermined information input via the telephone line or CATV network. Fig. 3 shows an embodiment where the channel selection is controlled according to the information from the telephone line, which may be the information about the audience rating (size of viewer audience) for example.

At an antenna 1, the high frequency (RF) television signal is induced. The RF TV signal is supplied to a channel selection circuit 31 and at the same time supplied to a picture recording unit 39 (This supply is not shown in the figure). The channel selection circuit 31 is under the control of a microcomputer/filter function part 35 as described later and selects the video signal of a predetermined channel from the RF TV signal and outputs the selected signal to a video processing circuit 32.

The video processing circuit 32 processes the input video signal as specified and supplies it to a picture tube 7. The picture tube 7 displays an image according to the input video signal on the display screen.

In this embodiment, the microcomputer/filter function part 35 sends data to and receives data from a modem 33. The modem 33 is in connection with a telephone line 34 so that it supplies the information input via the telephone line 34 to the microcomputer/filter function part 35 and sends the information from the microcomputer/filter function part 35 via the telephone line 34.

The microcomputer/filter function part 35 controls the channel selection at the channel selection circuit 31 and filters the information from the modem 33 as specified according to the information stored in a memory 36, and supplies the filtered data to a picture recording control unit 38.

For example, upon input of the information about the audience rating for the programs on the channels via the modem 33, the microcomputer/filter function part 35 decides the channel to be selected for receiving according to the audience rating and supplies the information to the picture recording control unit 38. The modem 33 fetches information from the telephone line 34 at any time (e.g., all the time). This enables real time receiving of the information about the audience rating for the programs on the channels.

A timer 37 has a clock function and outputs the current time or other time information to the microcomputer/filter function part 35.

The memory 36 stores the information for filtering according to the user's operation, for example.

Suppose, for example, the memory 36 stores the information to select a sports program with an audience rating higher than a predetermined level. The microcomputer/filter function part 35 outputs the information to select a sports program found to have a high audience rating according to the information about the audience rating from the modem 33 to the picture recording control unit 38, no matter what program is currently displayed on the picture tube 7.

Suppose now, for example, that the memory 36 stores the information to select an educational program with a low audience rating. According to the information about the audience rating from the modem 33, the microcomputer/filter function part 35 recognizes the channel and the time of such educational program with a low audience rating and, according to the information from the timer 37, outputs the information to select this educational program with a low audience rating at the appropriate time to the picture recording control unit 38.

The microcomputer/filter function part 35 can also have the memory 36 store the information about the audience rating from the modem 33. In this case, the microcomputer/filter function part 35 does not directly use the information about the audience rating from the modem 33. It decides the program to be selected according to the statistic amount obtained from the information about the audience rating accumulated at the memory 36 and outputs the information about it to the picture recording control unit 38.

The picture recording control unit 38 controls the picture recording unit 39 upon receipt of instructions about the channel selection from the microcomputer/filter function part 35. The picture recording unit 39 is under the control of the picture recording control unit 38 for recording. It records the program on the channel specified in the RF TV signal from the antenna 1.

Next, the operation of this embodiment with the configuration as described above is described below.

Suppose that the memory 36 stores the information to select a sports program with an instantaneous audience rating of or above 40% and the user selects any desired channel regardless of the information stored in the memory 36.

The RF TV signal from the antenna 1 is supplied to the channel selection circuit 31 and the picture recording unit 39. Instructions for channel selection are given to the channel selection circuit 31 from the microcomputer/filter function part 35 according to the user operation. The channel selection circuit 31 selects the program on the channel according to the user operation and supplies it to the video processing circuit 32. The video processing circuit 32 processes as specified the input video signal of the program and supplies such signal to the picture tube 7. Thus, the program on the channel according to the user operation is displayed on the display screen of the picture tube 7.

Suppose now that the information about a sports program with an instantaneous audience rating of 45% is input via the modem 33 while a predetermined program is displayed. The microcomputer/filter function part 35 supplies the information to select this high rating program to the picture recording control unit 38 according to the information stored in the memory 36. The picture recording control unit 38 controls the picture recording unit 39 to record this high rating sports program.

Thus, in this embodiment, with outside information provided via the modem and with filtering such information as specified, programs desired by the user can be selected without any direct channel selection by the user in addition to the programs definitely selected by the user according to his/her will. The program according to the information from outside is recorded regardless of the program currently displayed on the screen. By this, recording can be made without spoiling the user's desire for the channel currently received. Even when the number of broadcast channels is increased, this system eliminates the need of retrieval for channel selection according to the outside information, which remarkably simplifies the operation. Unlike the channel selection according to the static amount in the user's channel selection, this system can provide more alternatives of channel selection for the user without any need of complicated operations.

It is obvious that, with several picture recording units provided, several programs selected according to the outside information can be recorded at the same time.

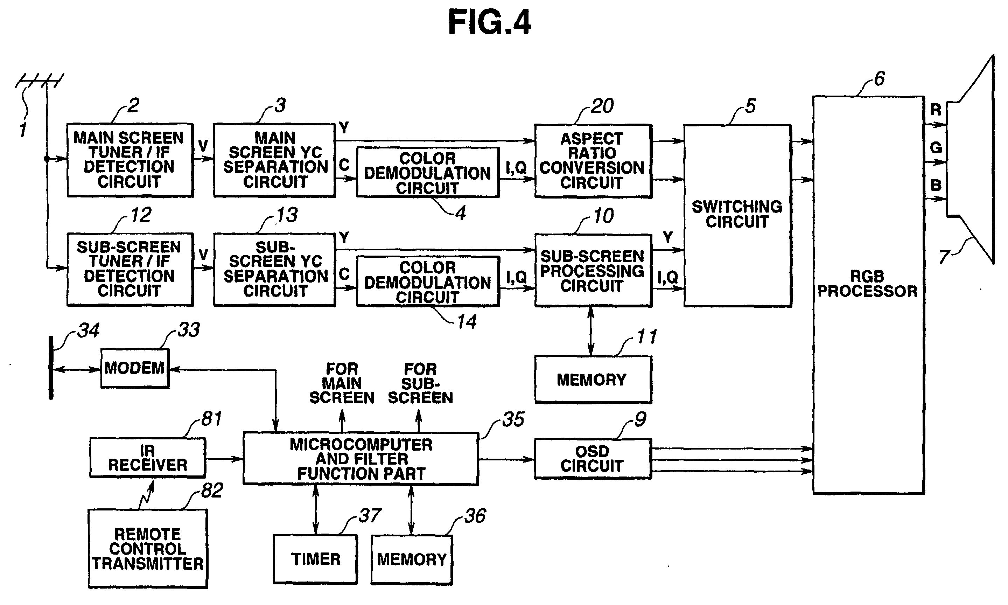

Fig. 4 is a block diagram showing another embodiment of the present invention. In the figure, the same constituents as in Fig. 1 are given the same reference numerals. The same constituents as in Fig. 3 are provided with the same reference numerals and the description for them is omitted. This embodiment applies the present invention to a television set having a multi-screen display function.

The RF signal from an antenna 1 is supplied to a main screen tuner/IF detection circuit 2 and a sub-screen tuner/IF detection circuit 12. The main screen tuner/IF detection circuit 2 and the sub-screen tuner/IF detection circuit 12 under the control of a microcomputer/filter function part 35 select programs on predetermined channels from the RF signal and output the main screen video signal and the sub-screen video signal to a main screen YC separation circuit 3 and a sub-screenYC separation circuit 13 respectively.

In this embodiment, the microcomputer/filter function part 35 outputs the signal for selection of a program on the channel according to the user's selection to the main screen tuner/IF detection circuit 2 and the sub-screen tuner/IF detection circuit 12 and at the same time instructs the program on the channel to be selected according to the information in the memory 36 and the information from the modem 33 to the sub- screen tuner/IF detection circuit 2.

A remote control transmitter 82 transmits the signal according to the user's operation. An IR receiver 81 receives the signal from the remote control transmitter 82 and supplies it to the microcomputer/filter function part 35. In other words, the user can make selection on the remote control transmitter 82.

The main screen YC separation circuit 3 and the sub-screen YC separation circuit 13 separate the input composite video signal into the luminance signal Y and the color signal C and, output the luminance signal Y to an aspect ratio conversion circuit 20 and a sub-screen processing circuit 10 respectively. The color signals C from the main screen YC separation circuit 3 and the sub-screen YC separation circuit 13 are supplied to color demodulation circuits 4 and 14 respectively. The color demodulation circuits 4 and 14 demodulate the input color signals to obtain the I/Q color difference signals and output them to the aspect ratio conversion circuit 20 and the sub-screen processing circuit 10 respectively.

The aspect ratio conversion circuit 20 under the control of the microcomputer/filter function part 35 reduces the main screen when multiple screens are displayed. For example, the aspect ratio conversion circuit 20 can be constituted by an exclusive IC from Toshiba (TC90A18F). The aspect ratio conversion circuit 20 outputs the main screen video signal in a reduced size to a switching circuit 5.

The sub-screen processing circuit 10 prepares the sub-screen video signal by processing the input video signal as specified (reduction, for example) and provides the sub-screen video signal to a memory 11 for storage. The sub-screen processing circuit 10 reduces the screen size by controlling the writing and reading clock signals for the memory 11, for example. Several video signals may be sometimes input to the sub-screen processing circuit 10. The sub-screen processing circuit 10 processes such several video signals as specified and stores them in the memory 11 one by one. The sub-screen processing circuit 10 reads the several sub-screen video signals stored in the memory 11 and supplies them to the switching circuit 5. The sub-screen processing circuit 10 can be constituted by an exclusive IC from Toshiba (TC90A17F), for example.

The switching circuit 5 under the control of the microcomputer/filter function part 35 selects the main screen video signal from the aspect ratio conversion circuit 20 at the timing corresponding to the main screen area and selects the applicable sub-screen video signal from the sub-screen processing circuit 10 at the timings corresponding to the several sub-screen areas so that it supplies such signal to an RGB processor 6. On the other hand, an OSD circuit 9 under the control of the microcomputer/filter function part 35 generates the video signal to provide necessary indications such as the channel number and supplies such signal to the RGB processor 6.

The RGB processor 6 generates three primary color signals R, G and B from the luminance signal and color difference signal as input and outputs them to a picture tube 7. The picture tube 7 displays images according to the input R, G and B signals on the display screen.

Next, referring to the explanatory views of Figs. 5 and 6, the operation of the embodiment having the above configuration is described below.

Suppose that a memory 36 stores the information to select a program with an audience rating of 10% or more from the programs of the current broadcast time and that the user selects the program he/she wants regardless of the information stored in the memory 36.

The RF TV signal from the antenna 1 is supplied to the main screen tuner/IF detection circuit 2 and the sub-screen tuner/IF detection circuit 12. The main screen tuner/IF detection circuit 2 is provided with instructions for channel selection from the microcomputer/filter function part 35 according to the user operation on the remote control transmitter 82 and the main screen tuner/IF detection circuit 2 selects the program on the channel according to the user operation and outputs such program.

The output from the main screen tuner/IF detection circuit 2 is separated into the luminance signal and the color signal by the main screen YC separation circuit 3. The color signal is demodulated by the color demodulation circuit 4 and is input to the aspect ratio conversion circuit 20.

When it is indicated that the user does not select the multi-screen display mode and no program with an audience rating of 10% or more is currently broadcast according to the audience rating information from the modem 33, the aspect ratio conversion circuit 20 does not convert the aspect ratio. In this case, the main screen video signal is supplied to the RGB processor 6 as it is via the switching circuit 5 and the image of the program selected by the user is displayed on the display screen of the picture tube 7.

Suppose that the user specifies a multi-screen display mode (e.g., multi-channel search mode). The sub-screen tuner/IF detection circuit 12 selects the channels one by one under the control of the microcomputer/filter function part 35. Th sub-screen YC separation circuit 13 separates the input video signals into Y and C signals and the color demodulation circuit 14 demodulates the color signal so that the luminance signal and the color difference signal are input to the sub-screen processing circuit 10.

The sub-screen processing circuit 10 reduces the input video signal at the reduction rate corresponding to the screen display method specified by the microcomputer/filter function part 35 and stores it to the memory 11. Then, it reads out the stored video signal of the programs one by one and outputs it to the switching circuit 5. In this case, the aspect ratio conversion circuit 20 changes the aspect ratio of the main screen video signal corresponding to the screen display method specified by the microcomputer/filter function part 35. The switching circuit 5 selects the main screen video signal at the timing corresponding to the main screen area and selects the sub-screen video signal at the timings corresponding to the several sub-screen areas and supplies them to the RGB processor 6. Thus, multiple screens are displayed on the display screen of the picture tube 7 as shown in Fig. 5, for example.

Fig. 5 shows an example where a main screen area 51 is provided on the left side of the screen and three sub-screen areas 52 to 54 are provided on the right side of the screen.

Suppose that two programs are found to have an audience rating exceeding 10% according to the information from the modem 33. The microcomputer/filter function part 35 outputs the information for selection of these two programs or the programs according to the audience rating information to the sub-screen tuner/IF detection circuit 12 and the sub-screen processing circuit 10.

When the programs according to the audience rating information are not selected, the sub-screen tuner/IF detection circuit 12 selects these two programs. Since the multi-channel search mode is specified, the sub-screen tuner/IF detection circuit 12 may have already selected these two programs.

The sub-screen processing circuit 10 reads out the applicable data from the memory 11 so as to continue displaying the two programs according to the audience rating information in the sub-screen areas regardless of the specification in the multi-channel search mode, until it receives any other specification from the user, for example.

On the other hand, the microcomputer/filter function part 35 causes an OSD circuit 9 to generate the video signal to indicate the audience rating in the display areas of the two programs according to the audience rating information, for example.

The switching circuit 5 selects the main screen video signal at the timing corresponding to the main screen area and selects the sub-screen video signals according to the channel search mode at the timings corresponding to the sub-screen areas for display of the sub-screens in the channel search mode, and selects the sub-screen video signal according to the audience rating information at the timings corresponding to the sub-screen areas for display of the sub-screens according to the audience rating information.

Thus, multiple screens as shown in Fig. 5 are displayed on the display screen of the picture tube 7.

In Fig. 6, a main screen area 55 is provided at the top of the screen and four sub-screen areas 56 to 59 are provided at the bottom of the screen. Among the sub-screen areas, the two areas 56 and 57 on the left displays the sub-screens according to the channel search mode with subsequently changing the programs and the two areas 58 and 59 on the right displays the sub-screens according to the audience rating information for a predetermined period. On these sub-screen areas 58 and 59, the audience rating indication to show the audience rating according to the information from the modem 33 is displayed. The user can decide the program to be selected with referring to the display on the sub-screen areas.

In this embodiment, too, substantially the same effect as that in the embodiment of Fig. 3 can be thus achieved. According to this embodiment, the program to be selected is not limited to one and the user can select a desired program from several programs according to the information from outside.

In the above embodiment, the signal processing circuit from the receipt of the RF TV signal for the main screen and sub-screens to the display on the screens is described according to an example of the existing terrestrial TV broadcasting.

The present invention can be also applied to the TV signals according to another method (e.g., the existing BS analog broadcasting and the CS digital broadcasting, or the BS digital broadcasting and the terrestrial digital broadcasting planned for the future). The same effect as described above can be obtained by selecting the applicable RF TV signal by the tuner, demodulating the signal to the luminance signal and the color signal using an appropriate demodulation circuit and supplying them to the aspect ratio conversion circuit 20 for the main screen or the sub-screen processing circuit 10.

The present invention is not limited to the embodiments described above. For example, the filtering by the microcomputer/filter function part 35 may be processed in various ways. Though the selection of a program having a high or low audience rating has been described in the above embodiments, a program with a predetermined audience rating can be recorded for example.

Thus, by filtering the signals making use of information other than program guide from the telephone line, the present invention can improve the convenience of the user. Though the utilization of the audience rating information has been described in the above embodiments, other various information may be utilized.

For example, the user may utilize the program sponsor information. In this case, the user stores the information about the desired sponsor to the memory 36. By filtering the signals to select the programs sponsored by the sponsor specified by the user, the user's desire can be satisfied.

The quiz program information may be also used, for example. Specifically, the information about the programs inviting answers to quizzes is utilized. By storing the information to select the programs inviting applications for quizzes to the memory 36, the filtering is made to select such programs.

It is also possible to utilize the information about the link with the Internet. In other words, the user can use the information about whether any supplementary site for a predetermined TV program is provided on the Internet. By filtering the signals using such information to select the programs with supplementary information on the Internet, the user can easily select the Internet supplemented programs. The user can enjoy TV programs using a terminal for Internet searching together. Even when the user comes to know the program information on the Internet terminal after the end of the program, the user does not miss the program since the applicable program has been automatically recorded.

Further, the user can utilize the outside information other than that sent via the telephone line. For example, when the EPG information shows that a program introducing the outline of the programs is transmitted, the user can have the system select such program about the outline.

As described above, the present invention facilitates the retrieval of programs even for increased channels and provides the user with more alternatives by taking advantage of outside information.

It is obvious that the present invention can be achieved by various different embodiments without departing from the scope of the invention. The present invention is not limited to any of its particular embodiments except that it is defined by the appended claims.

## Claims

1. A television set, comprising:
an information fetching means (33, 34, 35) for fetching information about a plurality of programs transmitted on broadcasting signals via a predetermined transmission path;
a memory means (36) for storing the information about the programs fetched by said information fetching means;
a filter means (35) for extracting a plurality of programs based on the information stored in said memory means (36) fetched by said information fetching means from the programs transmitted on said broadcasting signals, the filter means (35) being connected to a recording means (39) for storing the programs extracted by said filter means based on the information; and
a control means (38) for controlling said recording means (39) and reading out the programs stored in said recording means for displaying the plurality of programs based on the information on a multiple screen (7).

2. A television set according to Claim 1, wherein said filter means (35) can increase or decrease the number of programs extracted, based on the information about the programs.

3. A television set according to Claim 1, wherein the information about the programs is audience rating information.

4. A television set according to Claim 1, wherein said filter means (35) selects programs when an audience rating relating thereto is equal to or higher than a predetermined audience rating.

5. A television set according to Claim 1, wherein the information about the programs is program sponsor information or information for a link which specifies Internet sites related to the programs.

6. A television set, comprising:
an information fetching means (33, 34, 35) for fetching information about a plurality of programs transmitted on broadcasting signals via a predetermined transmission path;
a memory means (36) which stores the information about the programs fetched by said information fetching means;
a filter means (35) for extracting a plurality of programs based on the information stored in said memory means (36) fetched by said information fetching means among the programs transmitted on said broadcasting signals, the filter means (35) being connected to temporary memory means (11) for storing the programs temporarily extracted by said filter means based on the information; and
a display control means (10) for controlling said temporary memory means (11) and reading out the programs stored in said temporary memory means for displaying the plurality of programs based on the information on a multiple screen (7).

7. A television set according to Claim 6, wherein the information about the programs is audience rating information.

8. A television set according to Claim 6, wherein said filter means (35) selects programs when an audience rating relating thereto is equal to or higher than a predetermined audience rating.

## Patentansprüche

1. Fernsehgerät, umfassend:
eine Informationseinholungseinrichtung (33, 34, 35) zum Einholen einer Information über eine Vielzahl von Programmen, die auf Rundfunksignalen über einen vorbestimmten Übertragungspfad übertragen werden;
eine Speichereinrichtung (36) zum Speichern der Information über die Programme, die von der Informationseinholungseinrichtung eingeholt sind;
eine Filtereinrichtung (35) zum Extrahieren einer Vielzahl von Programmen auf der Grundlage der in der Speichereinrichtung (36) gespeicherten Information, die von der Informationseinholungseinrichtung von den Programmen eingeholt ist, die auf den Rundfunksignalen übertragen werden, wobei die Filtereinrichtung (35) mit einer Aufzeichnungseinrichtung (39) zum Speichern der Programme, die von der Filtereinrichtung auf der Grundlage der Information extrahiert sind, verbunden ist; und
eine Steuereinrichtung (38) zum Steuern der Aufzeichnungseinrichtung (39) und zum Auslesen der Programme, die in der Aufzeichnungseinrichtung gespeichert sind, um die Vielzahl von Programmen auf der Grundlage der Information auf einem Mehrfachschirm (7) anzuzeigen.

2. Fernsehgerät nach Anspruch 1, wobei die Filtereinrichtung (35) die Anzahl von extrahierten Programmen auf der Grundlage der Information über die Programme erhöhen oder verringern kann.

3. Fernsehgerät nach Anspruch 1, wobei die Information über die Programme eine Publikumsbewertungsinformation ist.

4. Fernsehgerät nach Anspruch 1, wobei die Filtereinrichtung Programme wählt, wenn eine Publikumsbewertung, die sich darauf bezieht, gleich oder höher als eine vorbestimmte Publikumsbewertung ist.

5. Fernsehgerät nach Anspruch 1, wobei die Information über die Programme eine Programm-Sponsorinformation oder eine Information über eine Verbindung ist, die Internet-Plätze spezifiziert, die sich auf die Programme beziehen.

6. Fernsehgerät, umfassend:
eine Informationseinholungseinrichtung (33, 34, 35) zum Einholen einer Information über eine Vielzahl von Programmen, die auf Rundfunksignalen über einen vorbestimmten Übertragungspfad übertragen werden;
eine Speichereinrichtung (36), die die Information über die Programme, die von der Informationseinholungseinrichtung eingeholt sind, speichert;
eine Filtereinrichtung (35) zum Extrahieren einer Vielzahl von Programmen auf der Grundlage der in der Speichereinrichtung (36) gespeicherten Information, die von der Informationseinholungseinrichtung unter den Programmen eingeholt ist, die auf den Rundfunksignalen übertragen werden, wobei die Filtereinrichtung (35) mit Zwischenspeichereinrichtungen (11) zum Zwischenspeichern der Programme, die von der Filtereinrichtung auf der Grundlage der Information extrahiert sind, verbunden ist; und
eine Anzeigesteuereinrichtung (10) zum Steuern der Zwischenspeichereinrichtung (11) und zum Auslesen der in der Zwischenspeichereinrichtung gespeicherten Programme, um die Vielzahl von Programmen auf der Grundlage der Information auf einem Mehrfachschirm (7) anzuzeigen.

7. Fernsehgerät nach Anspruch 6, wobei die Information über die Programme eine Publikumsbewertungsinformation ist.

8. Fernsehgerät nach Anspruch 6, wobei die Filtereinrichtung Programme wählt, wenn eine Publikumsbewertung, die sich darauf bezieht, gleich oder höher als eine vorbestimmte Publikumsbewertung ist.

## Revendications

1. Téléviseur comprenant:
un moyen de recherche d'information (33, 34, 35) afin de rechercher une information concernant une pluralité de programmes émis sur des signaux de radiodiffusion par l'intermédiaire d'un trajet d'émission prédéterminé;
un moyen de mémoire (36) pour mémoriser l'information concernant les programmes recherchés par ledit moyen de recherche d'information;
un filtre (35) afin d'extraire une pluralité de programmes en fonction de l'information mémorisée dans ledit moyen de mémoire (36) recherchés par ledit moyen de recherche d'information à partir des programmes émis sur lesdits signaux de radiodiffusion, le filtre (35) étant connecté à un moyen d'enregistrement (39) pour mémoriser les programmes extraits par ledit filtre en fonction de l'information ; et
un moyen de contrôle (38) afin de contrôler ledit moyen d'enregistrement (39) et lire les programmes mémorisés dans ledit moyen d'enregistrement afin d'afficher la pluralité de programmes en fonction de l'information sur un écran multiple (7).

2. Téléviseur selon la revendication 1, dans lequel ledit filtre (35) peut augmenter ou diminuer le nombre de programmes extraits, en fonction de l'information concernant les programmes.

3. Téléviseur selon la revendication 1, dans lequel l'information concernant les programmes est une information de taux d'audience.

4. Téléviseur selon la revendication 1, dans lequel ledit filtre (35) sélectionne des programmes lorsqu'un taux d'audience associé à ceux-ci est égal à ou supérieur à un taux d'audience prédéterminé.

5. Téléviseur selon la revendication 1, dans lequel l'information concernant les programmes est une information de sponsor de programme ou une information pour une liaison spécifiant des sites Internet associés aux programmes.

6. Téléviseur comprenant:
un moyen de recherche d'information (33, 34, 35) afin de rechercher une information concernant une pluralité de programmes émis sur des signaux de radiodiffusion par l'intermédiaire d'un trajet d'émission prédéterminé;
un moyen de mémoire (36) qui mémorise l'information concernant les programmes recherchés par ledit moyen de recherche d'information;
un filtre (35) afin d'extraire une pluralité de programmes en fonction de l'information mémorisée dans ladite mémoire (36) recherchés par ledit moyen de recherche d'information parmi les programmes émis sur lesdits signaux de radiodiffusion, le filtre (35) étant relié à un moyen de mémoire temporaire (11) afin de mémoriser les programmes temporairement extraits par ledit filtre en fonction de l'information; et
un moyen de commande d'affichage (10) afin de commander ledit moyen de mémoire temporaire (11) et de lire les programmes mémorisés dans ledit moyen de mémoire temporaire afin d'afficher la pluralité de programmes en fonction de l'information sur un écran multiple (7).

7. Téléviseur selon la revendication 6, dans lequel l'information concernant les programmes est une information de taux d'audience.

8. Téléviseur selon la revendication 6, dans lequel ledit filtre (35) sélectionne des programmes lorsqu'un taux d'audience associé à ceux-ci est égal à ou supérieur à un taux d'audience prédéterminé.
